# EUROPEAN PATENT SPECIFICATION

(11) **EP 2 294 831 B1**
(45) Date of publication and mention of the grant of the patent: **27.02.2013**
(21) Application number: 09738583.5
(22) Date of filing: 29.04.2009
(51) Int. Cl.: H04Q 1/20

(54) **IMPROVEMENTS TO AN ACTUATOR MODULE DESIGNED FOR INTERCEPTING THE PAIRS OF METAL TELEPHONE CONDUCTORS ALREADY TERMINATED IN TELEPHONE EXCHANGES**
VERBESSERUNGEN AN EINEM STELLGLIEDMODUL, DAS DAFÜR AUSGELEGT IST, DIE BEREITS IN TELEFONVERMITTLUNGEN ABGESCHLOSSENEN PAARE VON METALLTELEFONLEITERN ABZUFANGEN
PERFECTIONNEMENTS APPORTÉS À UN MODULE ACTIONNEUR CONÇU POUR INTERCEPTER LES PAIRES DE CONDUCTEURS TÉLÉPHONIQUES MÉTALLIQUES DÉJÀ TERMINÉES DANS DES CENTRAUX TÉLÉPHONIQUES

(30) Priority: 30.04.2008 IT RM20080229
(43) Date of publication of application: 16.03.2011
(73) Proprietor: Auxitel Spa, 88900 Crotone (IT)
(72) Inventor: MURA, Silvano, I-00185 Roma (IT)
(74) Representative: Sarpi, Maurizio
(86) International application number: PCT/IT2009/000191
(87) International publication number: WO 2009/133583

(56) References cited:
- WO-A2-2006/114804
- US-A- 3 919 503

## Description

The present invention relates to the sector of fixed telephony and in particular to improvements of an actuator module designed for intercepting the pairs of metal telephone conductors already terminated in telephone exchanges, which is to be mechanically constrained to the respective termination strip and is equipped with a plurality of fixed laminas that are inserted in a stable way directly in the known sectioning points of the network termination already existing at the moment of installation of said actuator module on the termination strip of the exchange.

More specifically, the present actuator module comprises, for each lamina, an S-shaped sectioning spring designed to pass from a resting or short-circuiting position, in which said spring is in contact with a first pad on the main PCB, to an operative or sectioning position, in which said spring is in contact with a second pad on a top PCB, exchange side.

Currently, there are already known some types of actuator modules designed for intercepting one or more pairs of metal telephone conductors to be tested, which albeit achieving the pre-set purposes present the disadvantage of requiring a multitude of actuation motors and electrical connections to enable provision of the various operations of control.

It is also known, from W02006/114804, a device for intercepting the metallic pairs in telephone exchanges, whereby, for every pair, a moving reed is provided in order to interrupt the connection between the metallic pairs and allow the connection to a test equipment. A drawback of such known device is that it is not always reliable, because of the large number of moving parts provided therein.

Consequently, the main purpose of the present invention is to overcome said disadvantage by providing an actuator module designed for intercepting one or more pairs of metal telephone conductors to be tested that will enable a drastic reduction in the amount of actuators and the amount of copper necessary for the connections required.

It should be noted that the reduction in the number of the actuators necessary not only entails an economic advantage but also an advantage as regards the reliability of the system since the smaller the number of mobile parts, the more the possibility of malfunctioning is reduced.

The above has been obtained, according to the invention by providing an actuator module to be installed on the corresponding exchange termination strip, said module comprising:
- a plurality of fixed intercepting means, each of which is designed to be inserted in a stable way in the corresponding sectioning point of the termination strips and is equipped with contacts for intercepting the known jacks of each pair of telephone conductors, exchange side and user side;
- one or more cables of a flat type, designed to connect said pairs of telephone conductors to the PCB of the actuator module itself;

- a first test bus, on which there slides a mobile selector equipped with sliding contacts connected to the bus itself for performing sniffing, user side, of the pairs of telephone conductors;
- mobile sectioning means for each pair of telephone conductors, which are designed to be displaced from a resting position, in which the contacts, exchange side and user side, of the pair are short-circuited, to an operative or sectioning position, in which said contacts are disconnected and the exchange side of each pair of metal telephone conductors is connected exclusively to a local measuring apparatus (of a known type) of the pairs to be analysed intercepted by the laminas themselves to test the desired pair, via a second test bus;
- movement means, designed to displace said mobile sectioning means from the resting position to the operative position, and vice versa;
- a pair of contact pads, set on the main PCB and connected to the user side of each telephone conductor: one for sniffing and one for short-circuiting of the user side with the exchange side;
- a contact pad connected to the second test bus, which is set on a top PCB and is connectable to the exchange side of each telephone conductor via said mobile sectioning means.

A better understanding of the invention will be obtained from the ensuing detailed description, with reference to the annexed plate of drawings, which illustrates a preferred embodiment thereof purely by way of non-limiting example.

In the drawings:
Figure 1 shows the schematic circuit diagram of the invention;
Figure 2 is a schematic illustration of an exchange backplane for IDC terminations, on which four modules with 25 pairs each are installed: two modules for the even pairs and two for the odd pairs;
Figures 3, 4 and 5 show details of an actuator module; and
Figure 6 shows an example of installation of the backplane containing the actuator modules and of connection of the latter to the pairs of telephone conductors terminated on the exchange termination strips.

With reference to the figures, in the embodiment described, an innovative actuator module M is envisaged that is to be installed, by an operator, on the known sectioning points of the network termination, and comprises:
- a plurality of laminas or combs LP, which are designed to be inserted stably in the corresponding sectioning points of the exchange termination strips, at the moment of installation of the actuator module M itself, each of which is equipped with a purposely provided flat cable F for connecting each pair of telephone conductors intercepted by said combs LP with the circuit of the PCB of the actuator module M for performing the desired measurements via a local measuring apparatus (of a known type);
- a mobile slider or selector S for selection of the pair of telephone conductors, which is designed to slide along the actuator module M for intercepting, with its purposely provided sliding contacts connected to the first test bus, the contact pads provided on the main PCB;
- mobile sectioning means of each telephone conductor, constituted by a flexible elastic lamina MS electrically connected to the exchange side, which is designed to be displaced from a resting position, in which the user side and the exchange side are short-circuited, to a sectioning position, in which the flexible lamina connects the exchange side to a pad on the top PCB connected to the second test bus;
- movement means P, designed to work to counter said flexible lamina MS for displacing it between the short-circuited position and the sectioning position, and vice versa.

According to a peculiar characteristic of the invention, the mobile slider or selector S is constituted substantially by a carriage that slides along a shaft A set longitudinally with respect to the actuator module M and is set in motion via a worm screw V parallel to said longitudinal shaft A, which always engages within an internal screw fixed with respect to the body of the selector S itself.

A further peculiar characteristic of the invention lies in the fact that said longitudinal shaft A has a non-circular, preferably polygonal, cross section or with at least one plane side surface parallel to its own axis.

In the example illustrated, said worm screw V and said longitudinal shaft A are moved, respectively, by two motors M1 and M2 that are independent of one another.

From what has been said, the present invention enables sniffing of the pairs of telephone conductors to be performed by simply causing rotation of the worm screw V for displacing the slider in such a way that its bottom sliding contacts, by displacing, come into electrical contact with the pads on the main PCB that correspond to said pairs.

Only in the event of effective need is it possible to perform sectioning of the pair of telephone conductors by means of the mere actuation of the second motor M2, which imposes rotation on the longitudinal shaft A through an angle sufficient to displace, via a purposely provided pinion P, the flexible lamina MS from the short-circuited position to the sectioning position.

Advantageously, with respect to actuator modules so far known, according to the present invention the number of laminas per pair and the number of wires for the measurements is substantially halved. Furthermore, also the moving parts are reduced, as likewise the number of motors necessary is limited to just two motors every 25 pairs.

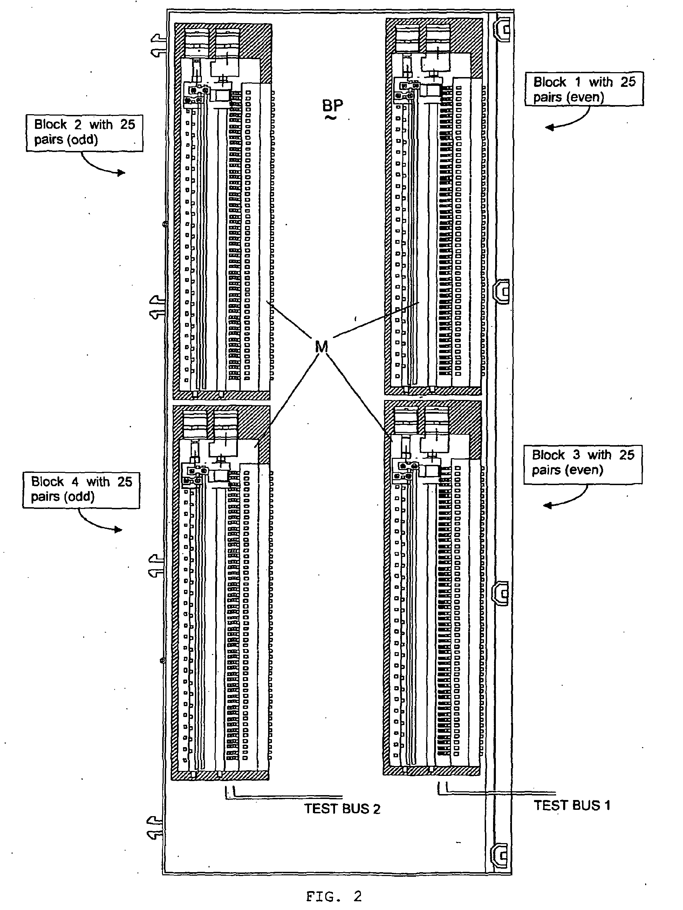

In practical use, the actuator module M so far described is mounted on a so-called backplane to be installed on the termination strips of the telephone exchanges. Each backplane that coming under an IDC termination with 100 telephone pairs is made up of 4 modules M of 25 pairs each (Figure 2).

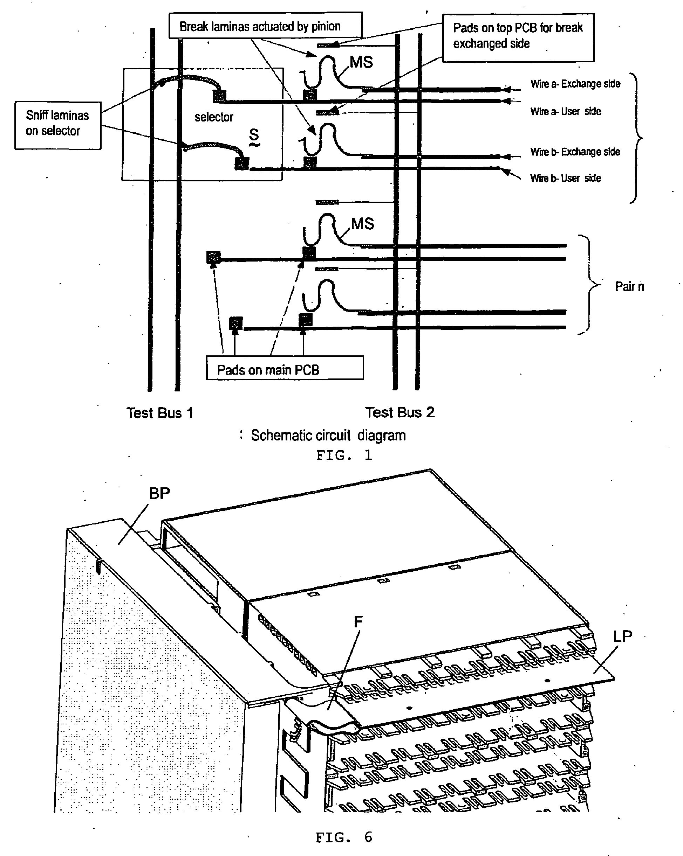

To enable execution of multiple measurements, connected to each module M are, respectively, only the even pairs or only the odd pairs. This means that each backplane with 100 pairs is connected to the known DXT Driver apparatus with two test buses, as illustrated in Figure 1.

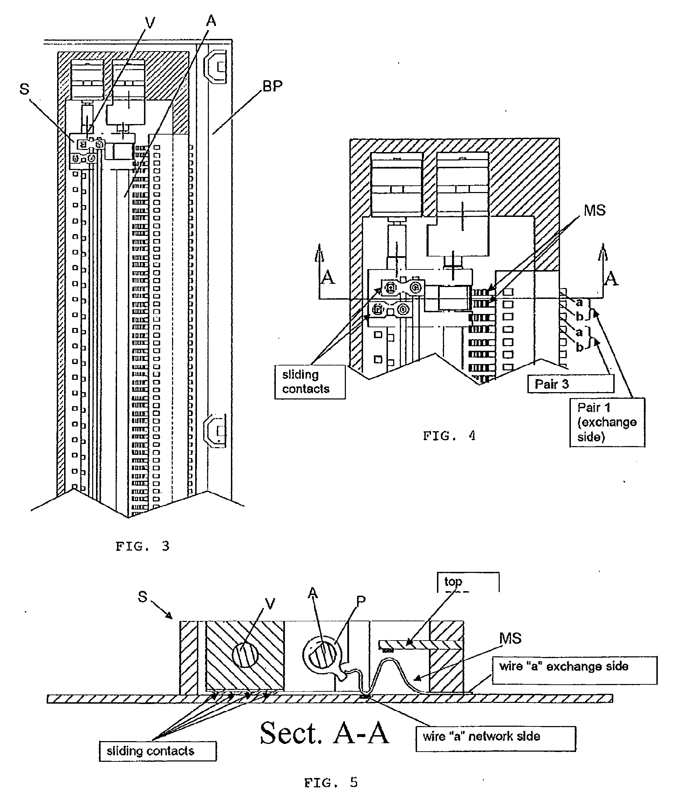

Each 25-pair actuator module M is equipped with just two motors M1 and M2, a mobile slider or selector S, two rotating shafts, one of which is threaded V and one is preferably faceted A, a pinion P that slides on the latter shaft A and that is rotated angularly thereby for movement, in pairs, of the 50 flexible laminas MS, which are one for each telephone conductor (Figures 3, 4 and 5).

The motor M1, mechanically connected to the threaded shaft V, controls displacement of the selector S into a position corresponding to the laminas MS of the telephone pair selected.

According to a third peculiar feature of the invention, in this position the sliding contacts are already connected in parallel to the telephone pair selected, and consequently, via the action of two purposely provided enabling relays of the first test bus, it is possible to carry out all the measurements that do not require sectioning of the pair itself.

The action of the second motor M2 moves the pinion P, which raises the flexible laminas MS of the telephone pair, thus bringing about sectioning of the pair itself for execution of the measurements required.

From what has been said, the action of raising the flexible laminas MS interrupts the electrical continuity of the telephone pair between exchange and user network. The user side continues to be connected to the first of the two test buses of the DXT Driver via the sliding contacts of the selector S, whilst the exchange side of the pair is connected to the second test bus via the respective flexible laminas MS, which, by being raised in the sectioning position, rest on the purposely provided electrical contact pads provided on the top PCB.

As may be seen from Figure 6, each actuator module M is connected via purposely provided flat cables F to as many sectioning points of the termination strips under which the telephone pairs, exchange side and user side, come.

In the example of embodiment illustrated, the backplane BP is preferably installable laterally on the termination strips for reducing the overall dimensions and for allowing free access to the sectioning points of the termination strips.

The present invention has been described and illustrated according to a preferred embodiment, but it is evident that any person skilled in the branch may make technically and/or functionally equivalent modifications and/or replacements thereto, without this implying any departure from the scope of protection of the present industrial patent right.

## Claims

1. An actuator module (M), designed for intercepting pairs of metal telephone conductors already terminated in telephone exchanges, said module being installable in the proximity of the sectioning points of a network termination strip and being **characterized in that** it comprises:
- a plurality of fixed intercepting means (LP), to be inserted in the corresponding sectioning point of termination strips and being equipped with contacts for intercepting jacks of each pair of telephone conductors, exchange side and user side;
- one or more cables of a flat type (F), for connecting said pairs of telephone conductors with a PCB of the actuator module (M) itself;
- a first test bus, on which there slides a mobile selector (S) equipped with sliding contacts, which are connected to the first test bus for sniffing the user side of the pairs of telephone conductors;
- mobile sectioning means (MS) for each pair of telephone conductors, which are implemented as a plurality of laminas that cooperate with movements means (P) and are designed to be displaced from a resting position, in which the contacts, exchange side and user side, of the pair are short-circuited, to an operative position, in which said contacts are disconnected and in which the exchange side of each pair of metal telephone conductors is connected exclusively to an apparatus for local measurement of the pairs to be analysed, in order to test the desired pair, via a second test bus;
- movement means (P), designed to displace said mobile sectioning means from the resting position to the operative position, and vice versa;
- a respective pair of contact pads, set on said PCB and connected to the user side of each telephone conductor: one for sniffing, and one for short-circuiting of the user side with the exchange side;
- a respective contact pad, connected to the second test bus, which is set on a further PCB and is connectable to the exchange side of each telephone conductor via said mobile sectioning means;
said contact pads co-operating with said sliding contacts of the mobile selector (S) connected to the first test bus.

2. The actuator module (M) according to the preceding claim, **characterized in that** it comprises:
- said intercepting means, which are constituted by a plurality of laminas or combs (LP), which are designed to be inserted in the corresponding sectioning points of the exchange termination strips at the moment of installation of the actuator module (M) itself and each of which is equipped with a flat cable (F) for connecting each pair of telephone conductors intercepted by said combs (LP) with the circuit of the PCB of the actuator module (M) for performing the desired measurements via a local measuring apparatus;
- a mobile selector (S) for selection of the pair of telephone conductors, which is designed to slide along the actuator module (M) for intercepting, with its purposely provided sliding contacts connected to the first test bus, the contact pads provided on the main PCB;
- said mobile sectioning means of each telephone conductor, which are constituted by a flexible elastic lamina (MS) electrically connected to the exchange side, which is designed to be displaced from a resting position, in which the user side and the exchange side are short-circuited, to a sectioning position, in which the flexible lamina connects the exchange side to a pad on the top PCB connected to the second test bus;
- said movement means (P), which work counter said flexible lamina (MS) for displacing it between the short-circuited position and the sectioning position, and vice versa.

3. The actuator module (M) according to the preceding claim, **characterized in that** the mobile slider or selector (S) is constituted substantially by a carriage that slides along a shaft (A) set longitudinally with respect to the actuator module (M) and is set in motion via a worm screw (V) parallel to said longitudinal shaft (A), which always engages within an internal screw fixed with respect to the body of the selector (S) itself.

4. The actuator module (M) according to the preceding claim, **characterized in that** said longitudinal shaft (A) has a non-circular cross section, which is polygonal or with at least one plane side surface parallel to its own axis.

5. The actuator module (M) according to Claim 3 or Claim 4, **characterized in that** said worm screw (V) and said longitudinal shaft (A) are moved by two motors (M1 and M2, respectively) that are independent of one another.

6. The actuator module (M) according to the preceding claim, **characterized in that** for performing sniffing of the pairs of telephone conductors, it is envisaged to cause rotation of the worm screw (V) for displacing the slider (S) in such a way that its bottom sliding contacts, by displacing, come into electrical contact with the pads on the main PCB corresponding to said pairs of telephone conductors.

7. The actuator module (M) according to the preceding claim, **characterized in that** for performing sectioning of the pair of telephone conductors it is envisaged to actuate the second motor (M2), which imposes rotation on the longitudinal shaft (A) for an angle sufficient to displace, via a purposely provided pinion (P), the flexible lamina (MS) from the short-circuited position to the sectioning position; it thus being obtained that, as compared to the actuator modules so far known, the number of laminas per pair and the number of wires for the measurements is substantially halved, and also that the moving parts are reduced, as likewise the number of motors necessary is limited to just two motors every 25 pairs.

8. The actuator module (M) according to the preceding claim, **characterized in that** it is mounted on a backplane (BP) installed on the termination strips of the telephone exchanges.

9. The actuator module (M) according to the preceding claim, **characterized in that** it comprises 25 pairs of telephone conductors and it is mounted on a backplane (BP) coming under an IDC termination with 100 telephone pairs.

10. The actuator module (M) according to any one of the preceding claims, **characterized in that** to enable execution of multiple measurements, it is connected only to the even pairs or only to the odd pairs.

11. The actuator module (M) according to Claims 9 and 10, **characterized in that** it is mounted on a backplane (BP) with 100 pairs connected to the known DXT Driver apparatus with two test buses.

12. The actuator module (M) according to Claim 5, **characterized in that** each actuator module (M) with 25 pairs is equipped with just two motors (M1 and M2), a mobile slider or selector (S), two rotating shafts, one of which is threaded (V) and the other is faceted (A), and a pinion (P) that slides on the latter shaft (A) and is rotated angularly thereby for the movement, in pairs, of the 50 flexible laminas (MS), which are one for each telephone conductor.

13. The actuator module (M) according to the preceding claim, **characterized in that** the motor (M1), mechanically connected to the threaded shaft (V), controls displacement of the selector (S) into a position corresponding to the flexible laminas (MS) of the telephone pair selected; in this position, the sliding contacts being already connected in parallel to the telephone pair selected and consequently, via the action of two purposely provided enabling relays of the first test bus, it is possible carry out all the measurements that do not require sectioning of the pair itself.

14. The actuator module (M) according to the preceding claim, **characterized in that** the second motor (M2) moves the pinion (P) that raises the flexible laminas (MS) of the telephone pair, thus bringing about sectioning of the pair itself for execution of the desired measurements.

15. The actuator module (M) according to the preceding claim, **characterized in that** the action of raising the flexible laminas (MS) interrupts the electrical continuity of the telephone pair between exchange and user network; said user side continuing to be connected to the first of the two test buses of the DXT Driver via the sliding contacts of the selector (S), whilst the exchange side of the pair is connected to the second test bus via the respective flexible laminas (MS), which, being raised in the sectioning position, rest on of the purposely provided electrical contact pads provided on the top PCB.

16. The actuator module (M) according to the preceding claim, **characterized in that** it is connected via flat cables (F) to as many sectioning points of the termination strips under which the telephone pairs, exchange side and user side, come.

17. The actuator module (M) according to Claim 8, **characterized in that**, for reducing the overall dimensions and for allowing free access to the sectioning points of the termination strips, it is mounted on a backplane (BP) installed laterally on the termination strips.

## Patentansprüche

1. Stellgliedmodul (M), das dafür ausgelegt ist, Paare von Metalltelefonleitern abzufangen, die bereits in Telefonvermittlungen terminiert wurden, wobei das Modul in der Nähe der Trennstellen einer Netzwerk-Anschlussklemmleiste installiert werden kann und **dadurch gekennzeichnet ist, dass** es Folgendes umfasst:
- eine Vielzahl fester Abfangmittel (LP), die in die entsprechende Trennstelle von Anschlussklemmleisten einzuführen sind und mit Kontakten zum Abfangen von Klinken eines jeden Paares von Telefonleitern auf der Vermittlungsseite und der Benutzerseite versehen sind;
- ein oder mehrere Kabel eines flachen Typs (F) zum Verbinden der Paare von Telefonleitern mit einer Leiterplatte des Stellgliedmoduls (M) selbst;
- einen ersten Testbus, an dem ein beweglicher Wähler (S) gleitet, der mit Gleitkontakten versehen ist, die mit dem ersten Testbus verbunden sind, um die Benutzerseite der Paare von Telefonleitern zu sondieren;
- bewegliche Trennmittel (MS) für jedes Paar von Telefonleitern, die als eine Vielzahl von Lamellen implementiert sind, die mit Bewegungsmitteln (P) zusammenwirken, und dafür ausgelegt sind, aus einer Ruheposition, in der die Kontakte auf der Vermittlungsseite und der Benutzerseite des Paares kurzgeschlossen sind, in eine operative Position verschoben zu werden, in der die Kontakte getrennt sind und in der die Vermittlungsseite eines jeden Paares von Metalltelefonleitern ausschließlich mit einer Vorrichtung zum punktuellen Messen der zu analysierenden Paare verbunden ist, um das gewünschte Paar über einen zweiten Testbus zu testen;
- Bewegungsmittel (P), die dafür ausgelegt sind, die beweglichen Trennmittel aus der Ruheposition in die operative Position und umgekehrt zu verschieben;
- ein jeweiliges Paar von Kontakthöckern, die auf der Leiterplatte angeordnet und mit der Benutzerseite eines jeden Telefonleiters verbunden sind: eines zum Sondieren und eines zum Kurzschließen der Benutzerseite mit der Vermittlungsseite;
- einen jeweiligen Kontakthöcker, der mit dem zweiten Testbus verbunden und auf einer anderen Leiterplatte angeordnet ist und mit der Vermittlungsseite eines jeden Telefonleiters über die beweglichen Trennmittel verbunden werden kann;
wobei die Kontakthöcker mit den Gleitkontakten des bewegliches Wählers (S) zusammenwirken, der mit dem ersten Testbus verbunden ist.

2. Stellgliedmodul (M) nach dem vorangehenden Anspruch, **dadurch gekennzeichnet, dass** es Folgendes umfasst:
- die Abfangmittel, die durch eine Vielzahl von Lamellen oder Kämmen (LP) gebildet werden, die dafür ausgelegt sind, in dem Moment in die entsprechenden Trennstellen der Vermittlungs-Anschlussklemmleisten eingeführt zu werden, in dem Stellgliedmodul (M) selbst installiert wird, und die jeweils mit einem Flachkabel (F) ausgestattet sind, um jedes Paar von Telefonleitern, die durch die Kämme (LP) abgefangen werden, mit dem Schaltkreis der Leiterplatte des Stellgliedmoduls (M) zu verbinden, um die gewünschten Messungen über eine lokale Messvorrichtung vorzunehmen;
- einen beweglicher Wähler (S) zum Auswählen des Paares von Telefonleitern, der dafür ausgelegt ist, an dem Stellgliedmodul (M) entlang zu gleiten, um mit seinen planmäßig angeordneten Gleitkontakten, die mit dem ersten Testbus verbunden sind, die Kontakthöcker abzufangen, die auf der Hauptplatine angeordnet sind;
- die beweglichen Trennmittel eines jeden Telefonleiters, die durch eine flexible elastische Lamelle (MS) gebildet werden, die elektrisch mit der Vermittlungsseite verbunden ist, die dafür ausgelegt ist, aus einer Ruheposition, in der die Benutzerseite und die Vermittlungsseite kurzgeschlossen sind, in eine Trennposition verschoben zu werden, in der die flexible Lamelle die Vermittlungsseite mit einem Kontakthöcker auf der obersten Leiterplatte verbindet, die mit dem zweiten Testbus verbunden ist;
- die Bewegungsmittel (P), die der flexiblen Lamelle (MS) entgegenwirken, um sie zwischen der kurzgeschlossenen Position und der Trennposition und umgekehrt zu verschieben.

3. Stellgliedmodul (M) nach dem vorangehenden Anspruch, **dadurch gekennzeichnet, dass** der bewegliche Schieber oder Wähler (S) im Wesentlichen von einem Schlitten gebildet ist, der entlang einer Welle (A) gleitet, die in Längsrichtung mit Bezug auf das Stellgliedmodul (M) angeordnet ist und über eine Schnecke (V) in Bewegung versetzt wird, die parallel zu der Längswelle (A) verläuft, die immer mit einer internen Schnecke im Eingriff steht, die mit Bezug auf den Korpus des Wählers (S) selbst feststehend ist.

4. Stellgliedmodul (M) nach dem vorangehenden Anspruch, **dadurch gekennzeichnet, dass** die Längswelle (A) einen nicht-kreisförmigen Querschnitt aufweist, der polygonal ist oder der mindestens eine plane Seitenfläche parallel zu ihrer eigenen Achse aufweist.

5. Stellgliedmodul (M) nach Anspruch 3 oder Anspruch 4, **dadurch gekennzeichnet, dass** die Schnecke (V) und die Längswelle (A) durch zwei Motoren (M1 bzw. M2) bewegt werden, die voneinander unabhängig sind.

6. Stellgliedmodul (M) nach dem vorangehenden Anspruch, **dadurch gekennzeichnet, dass** es zum Sondieren der Paare von Telefonleitern dafür vorgesehen ist, eine Rotation der Schnecke (V) zu veranlassen, um den Schieber (S) in einer solchen Weise zu verschieben, dass seine unteren Gleitkontakte durch das Verschieben in elektrischen Kontakt mit den Kontakthöckern auf der Hauptplatine, die den Paaren von Telefonleitern entsprechen, gelangen.

7. Stellgliedmodul (M) nach dem vorangehenden Anspruch, **dadurch gekennzeichnet, dass** es zum Trennen des Paares von Telefonleitern dafür vorgesehen ist, den zweiten Motor (M2) zu betätigen, der die Längswelle (A) in einem Winkel dreht, der ausreicht, um die flexible Lamelle (MS) mittels eines planmäßig angeordneten Ritzels (P) aus der kurzgeschlossenen Position in die Trennposition zu verschieben, wodurch erreicht wird, dass im Vergleich zu den Stellgliedmodulen des Standes der Technik die Anzahl von Lamellen je Paar und die Anzahl der Drähte für die Messungen im Wesentlichen halbiert werden, und ferner, dass die Zahl der beweglichen Teile reduziert wird, wie auch die Anzahl der benötigten Motoren auf nur zwei Motoren je 25 Paare begrenzt wird.

8. Stellgliedmodul (M) nach dem vorangehenden Anspruch, **dadurch gekennzeichnet, dass** es an einer Rückwand (BP) montiert ist, die an den Anschlussklemmleisten der Telefonvermittlungen installiert ist.

9. Stellgliedmodul (M) nach dem vorangehenden Anspruch, **dadurch gekennzeichnet, dass** es 25 Paare von Telefonleitern umfasst und an einer Rückwand (BP) montiert ist, die unter eine IDC-Terminierung mit 100 Telefonpaaren kommt.

10. Stellgliedmodul (M) nach einem der vorangehenden Ansprüche, **dadurch gekennzeichnet, dass** es, um das Ausführen mehrerer Messungen zu ermöglichen, nur mit den geradzahligen Paaren oder nur mit den ungeradzahligen Paaren verbunden ist.

11. Stellgliedmodul (M) nach den Ansprüchen 9 und 10, **dadurch gekennzeichnet, dass** es an einer Rückwand (BP) mit 100 Paaren montiert ist, die mit zwei Testbussen mit der bekannten DXT-Treibervorrichtung verbunden sind.

12. Stellgliedmodul (M) nach Anspruch 5, **dadurch gekennzeichnet, dass** jedes Stellgliedmodul (M) mit 25 Paaren mit Folgendem ausgestattet ist: nur zwei Motoren (M1 und M2), einem beweglichen Schieber oder Wähler (S), zwei rotierenden Wellen, von denen eine mit einem Gewinde versehen ist (V) und die andere facettiert ist (A), und einem Ritzel (P), das an der letzteren Welle (A) gleitet und durch diese in einem Winkel gedreht wird, um die 50 flexiblen Lamellen (MS), von denen eine für jeden Telefonleiter vorgesehen ist, paarweise zu bewegen.

13. Stellgliedmodul (M) nach dem vorangehenden Anspruch, **dadurch gekennzeichnet, dass** der Motor (M1), der mechanisch mit der mit einem Gewinde versehenen Welle (V) verbunden ist, die Verschiebung des Wählers (S) in eine Position steuert, die den flexiblen Lamellen (MS) des gewählten Telefonpaares entspricht; wobei in dieser Position die Gleitkontakte bereits mit dem gewählten Telefonpaar parallel geschaltet sind und es folglich, mittels der Aktion zweier planmäßig angeordneter Aktivierungsrelais des ersten Testbus, möglich ist, alle Messungen auszuführen, die kein Trennen des Paares selbst erfordern.

14. Stellgliedmodul (M) nach dem vorangehenden Anspruch, **dadurch gekennzeichnet, dass** der zweite Motor (M2) das Ritzel (P) bewegt, das die flexiblen Lamellen (MS) des Telefonpaares anhebt, wodurch eine Trennung des Paares selbst bewirkt wird, um die gewünschten Messungen auszuführen.

15. Stellgliedmodul (M) nach dem vorangehenden Anspruch, **dadurch gekennzeichnet, dass** die Aktion des Anhebens der flexiblen Lamellen (MS) die elektrische Durchgängigkeit des Telefonpaares zwischen Vermittlungs- und Benutzernetzwerk unterbricht; wobei die Benutzerseite weiterhin über die Gleitkontakte des Wählers (S) mit dem ersten der zwei Testbusse des DXT-Treibers verbunden ist, während die Vermittlungsseite des Paares mit dem zweiten Testbus über die jeweiligen flexiblen Lamellen (MS) verbunden ist, die, während sie in die Trennposition angehoben sind, auf den planmäßig angeordneten elektrischen Kontakthöckern der obersten Leiterplatte ruhen.

16. Stellgliedmodul (M) nach dem vorangehenden Anspruch, **dadurch gekennzeichnet, dass** es über Flachkabel (F) mit so vielen Trennstellen der Anschlussklemmleisten verbunden ist, unter welche die Telefonpaare der Vermittlungsseite und der Benutzerseite kommen.

17. Stellgliedmodul (M) nach Anspruch 8, **dadurch gekennzeichnet, dass** es zum Reduzieren der Gesamtabmessungen und zum Ermöglichen eines ungehinderten Zugangs zu den Trennstellen der Anschlussklemmleisten an einer Rückwand (BP) montiert ist, die seitlich an den Anschlussklemmleisten installiert ist.

## Revendications

1. Module d'actionneur (M), conçu pour intercepter des paires de conducteurs téléphoniques métalliques déjà terminées dans des centraux téléphoniques, ledit module pouvant être installé à proximité des points de sectionnement d'une bande de terminaison de réseau et étant **caractérisé en ce qu'**il comprend :
- une pluralité de moyens d'interception fixes (LP), destinés à être insérés dans le point de sectionnement correspondant de bandes de terminaison et étant équipés avec des contacts pour des connecteurs d'interception de chaque paire de conducteurs téléphoniques, côté central téléphonique et côté utilisateur ;
- un ou plusieurs câbles d'un type plat (F), pour connecter lesdites paires de conducteurs téléphoniques avec une carte de circuit imprimé du module d'actionneur (M) lui-même ;
- un premier bus de test, sur lequel glisse un sélecteur mobile (S) équipé de contacts glissants, qui sont connectés au premier bus de test pour renifler le côté utilisateur des paires de conducteurs téléphoniques ;
- des moyens de sectionnement mobiles (MS) pour chaque paire de conducteurs téléphoniques, qui sont mis en oeuvre comme une pluralité de lamelles qui coopèrent avec des moyens de déplacement (P) et sont conçues pour être déplacées d'une position de repos, dans laquelle les contacts, côté central téléphonique et côté utilisateur, de la paire sont court-circuités, à une position de fonctionnement, dans laquelle lesdits contacts sont déconnectés et dans laquelle le côté central téléphonique de chaque paire de conducteurs téléphoniques métalliques est connecté exclusivement à un dispositif pour la mesure locale des paires à analyser, de manière à tester la paire désirée, via un deuxième bus de test ;
- des moyens de déplacement (P), conçus pour déplacer lesdits moyens de sectionnement mobiles de la position de repos à la position de fonctionnement, et inversement ;
- une paire respective de pastilles de contact, disposées sur ladite carte de circuit imprimé et connectées au côté utilisateur de chaque conducteur téléphonique : un pour le reniflement et un pour le court-circuitage du côté utilisateur avec le côté central téléphonique ;
- une pastille de contact respective, connectée au deuxième bus de test, qui est disposée sur une autre carte de circuit imprimé et peut être connectée au côté central téléphonique de chaque conducteur téléphonique via lesdits moyens de sectionnement mobiles ;
lesdites pastilles de contact coopérant avec lesdits contacts glissants du sélecteur mobile (S) connecté au premier bus de test.

2. Module d'actionneur (M) selon la revendication précédente, **caractérisé en ce qu'**il comprend :
- lesdits moyens d'interception, qui sont constitués par une pluralité de lamelles ou peignes (LP), qui sont conçus pour être insérés dans les points de sectionnement correspondants des bandes de terminaison de central téléphonique au moment de l'installation du module d'actionneur (M) lui-même et chacun desquels est équipé d'un câble plat (F) pour connecter chaque paire de conducteurs téléphoniques interceptée par lesdits peignes (LP) avec le circuit de la carte de circuit imprimé du module d'actionneur (M) pour effectuer les mesures désirées via un dispositif de mesure local ;
- un sélecteur mobile (S) pour la sélection de la paire de conducteurs téléphoniques, qui est conçu pour glisser le long du module d'actionneur (M) pour intercepter, avec ses contacts glissants spécifiquement prévus connectés au premier bus de test, les pastilles de contact prédisposées sur la carte de circuit imprimé principale ;
- lesdits moyens de sectionnement mobiles de chaque conducteur téléphonique, qui sont constitués par une lamelle élastique flexible (MS) connectée électriquement au côté central téléphonique, qui est conçue pour être déplacée d'une position de repos, dans laquelle le côté utilisateur et le côté central téléphonique sont court-circuités, à une position de sectionnement, dans laquelle la lamelle flexible connecte le côté central téléphonique à une pastille sur la carte de circuit imprimé supérieure connectée au deuxième bus de test ;
- lesdits moyens de déplacement (P), qui travaillent contre ladite lamelle flexible (MS) pour la déplacer entre la position court-circuitée et la position de sectionnement, et inversement.

3. Module d'actionneur (M) selon la revendication précédente, **caractérisé en ce que** le curseur ou sélecteur mobile (S) est constitué essentiellement par un chariot qui coulisse le long d'un arbre (A) disposé longitudinalement par rapport au module d'actionneur (M) et est mis en mouvement via une vis sans fin (V) parallèle audit arbre longitudinal (A), laquelle s'engage toujours à l'intérieur d'une vis interne fixe par rapport au corps du sélecteur (S) lui-même.

4. Module d'actionneur (M) selon la revendication précédente, **caractérisé en ce que** ledit arbre longitudinal (A) a une section transversale non circulaire, qui est polygonale ou avec au moins une surface latérale plane parallèle à son propre axe.

5. Module d'actionneur (M) selon la revendication 3 ou la revendication 4, **caractérisé en ce que** ladite vis sans fin (V) et ledit arbre longitudinal (A) sont déplacés par deux moteurs (M1 et M2, respectivement) qui sont indépendants l'un de l'autre.

6. Module d'actionneur (M) selon la revendication précédente, **caractérisé en ce que**, pour effectuer le reniflement des paires de conducteurs téléphoniques, il est prévu de provoquer une rotation de la vis sans fin (V) pour déplacer le curseur (S) de manière que ses contacts glissants inférieurs, en se déplaçant, viennent en contact électrique avec les pastilles sur la carte de circuit imprimé principale correspondant auxdites paires de conducteurs téléphoniques.

7. Module d'actionneur (M) selon la revendication précédente, **caractérisé en ce que**, pour effectuer le sectionnement de la paire de conducteurs téléphoniques, il est prévu d'actionner le deuxième moteur (M2), qui impose une rotation sur l'axe longitudinal (A) pour un angle suffisant à déplacer, via un pignon spécifiquement prévu (P), la lamelle flexible (MS) de la position court-circuitée à la position de sectionnement ; il est ainsi obtenu que, en comparaison avec les modules d'actionneur connus jusqu'à présent, le nombre de lamelles par paire et le nombre de fils pour les mesures est sensiblement divisé par deux, et également que les parties mobiles sont réduites, de même que le nombre de moteurs nécessaires est limité à seulement deux moteurs toutes les 25 paires.

8. Module d'actionneur (M) selon la revendication précédente, **caractérisé en ce qu'**il est monté sur un fond de panier (BP) installé sur les bandes de terminaison des centraux téléphoniques.

9. Module d'actionneur (M) selon la revendication précédente, **caractérisé en ce qu'**il comprend 25 paires de conducteurs téléphoniques et **en ce qu'**il est monté sur un fond de panier (BP) venant au-dessous d'une terminaison IDC avec 100 paires téléphoniques.

10. Module d'actionneur (M) selon l'une quelconque des revendications précédentes, **caractérisé en ce que**, pour permettre l'exécution de mesures multiples, il est connecté seulement aux paires paires ou seulement aux paires impaires.

11. Module d'actionneur (M) selon les revendications 9 et 10, **caractérisé en ce qu'**il est monté sur un fond de panier (BP) avec 100 paires connectées au dispositif Driver DXT connu avec deux bus de test.

12. Module d'actionneur (M) selon la revendication 5, **caractérisé en ce que** chaque module d'actionneur (M) avec 25 paires est équipée de seulement deux moteurs (M1 et M2), un curseur ou sélecteur mobile (S), deux arbres rotatifs, un desquels est fileté (V) et l'autre est à facettes (A), et un pignon (P) qui coulisse sur le dernier arbre (A) et est ainsi tourné angulairement pour le mouvement, par paire, des 50 lamelles flexibles (MS), qui sont une pour chaque conducteur téléphonique.

13. Module d'actionneur (M) selon la revendication précédente, **caractérisé en ce que** le moteur (M1), connecté mécaniquement à l'arbre fileté (V), commande le déplacement du sélecteur (S) dans une position correspondant aux lamelles flexibles (MS) de la paire téléphonique sélectionnée ; dans cette position, les contacts glissants sont déjà connectés en parallèle avec la paire téléphonique sélectionnée et par conséquent, par le biais de l'action de deux relais spécifiquement prévus du premier bus de test, il est possible d'exécuter toutes les mesures qui ne nécessitent pas le sectionnement de la paire elle-même.

14. Module d'actionneur (M) selon la revendication précédente, **caractérisé en ce que** le deuxième moteur (M2) déplace le pignon (P) qui soulève les lamelles flexibles (MS) de la paire téléphonique, en entraînant ainsi le sectionnement de la paire elle-même pour l'exécution des mesures désirées.

15. Module d'actionneur (M) selon la revendication précédente, **caractérisé en ce que** l'action de soulèvement des lamelles flexibles (MS) interrompt la continuité électrique de la paire téléphonique entre central téléphonique et réseau utilisateur ; ledit côté utilisateur continuant à être connecté au premier des deux bus de test du Driver DXT via les contacts glissants du sélecteur (S), alors que le côté central téléphonique de la paire est connectée au deuxième bus de test via les lamelles flexibles respectives (MS), lesquelles, étant soulevées dans la position de sectionnement, reposent sur les pastilles de contact électrique spécifiquement prévues prédisposées sur la carte de circuit imprimé supérieure.

16. Module d'actionneur (M) selon la revendication précédente, **caractérisé en ce qu'**il est connecté via des câbles plats (F) à autant de points de sectionnement des bandes de terminaison sous lesquels les paires téléphoniques, côté central téléphonique et côté utilisateur, viennent.

17. Module d'actionneur (M) selon la revendication 8, **caractérisé en ce que**, pour réduire les dimensions globales et pour permettre le libre accès aux points de sectionnement des bandes de terminaison, il est monté sur un fond de panier (BP) installé latéralement sur les bandes de terminaison.
